# EUROPEAN PATENT SPECIFICATION

(11) **EP 2 414 705 B1**
(45) Date of publication and mention of the grant of the patent: **03.07.2013**
(21) Application number: 10718657.9
(22) Date of filing: 31.03.2010
(51) Int. Cl.: F16H 63/42

(54) **SELECTOR**
SELEKTOR
SÉLECTEUR

(30) Priority: 03.04.2009 GB 0905843
(43) Date of publication of application: 08.02.2012
(73) Proprietor: Bentley Motors Limited, Crewe, Cheshire CW1 3PL (GB)
(72) Inventor: BUGEJA, Brian, Crewe CW1 3PL (GB); BURR, Thomas, Lancaster LA1 5LN (GB)
(74) Representative: Wilson Gunn
(86) International application number: PCT/GB2010/050568
(87) International publication number: WO 2010/112932

(56) References cited:
- EP-A1- 0 416 227
- EP-A2- 1 239 192
- GB-A- 1 211 452
- US-A- 3 985 095
- US-A- 5 816 100

## Description

The present invention relates to a selector with an associated display operative to show a selection mode. The invention relates particularly, although not exclusively, to an automotive automatic transmission selector.

Conventional automotive automatic transmissions have been provided with a selector lever to enable different modes of operation of the transmission to be selected. Usually these modes comprise Park, Reverse, Neutral and Drive. One or more additional modes may also be provided. With mechanically operated transmissions these tended to be lock out modes to prevent the transmission changing into one or more of the highest available ratios. With newer electronic or software controlled transmissions one or more programmed modes of operation may be available such as a 'Sport' or 'Winter' mode.

With a conventional mechanical transmission the selector is moved to a position corresponding to the desired mode of operation and each position is labelled according to the associated mode, for example as P R N D 3 2 1 to denote the lever positions for the selection of park, reverse, neutral, drive and various lock out positions where the number designates the highest permissible operating ratio of the transmission.

A driver can therefore easily see where to position the lever to select a desired mode of operation and can tell the selected mode at a glance. In addition, to aid the driver in low light conditions as well as generally it is known to arrange for the label indicating the selected mode, i.e. that which the selector lever is adjacent, to illuminate and/or change colour to further indicate the selection.

With the advent of electronic and software control of automatic transmissions there need only be an electrical link between a selector and the transmission, a so-called shift-by-wire arrangement. As the mechanical operation of the selector is independent of the mechanical operation of the transmission variations in selector operation have become possible.

One existing arrangement is a mono-stable selector lever. The lever is biased towards a stable return position but can be displaced in opposite directions from the return position to select a desired mode of operation by sequentially indexing up or down a sequence of available modes. Because the mono-stable lever itself always returns to the same rest position it is not possible, unlike with multi-stable levers, to indicate a selected mode by the position of the selector lever.

For example, EP 0416227 A1 shows a selector lever where the selected and available modes of operation are displayed on a separate instrument panel. The position of the selector lever is not helpful in indicating the selected mode.

It is an object of embodiments of the present invention to address this problem.

According to an aspect of the present invention there is provided a selector arrangement comprising a selector resiliently biased towards a stable return position and which may be displaced from the return position against the resilient bias and then returned to the return position by the resilient bias to make a selection from a number of available possibilities, and a display operative to display indications of a plurality or all of the available possibilities together, wherein as a selection is made the displayed indications move relative to the return position of the selector so that the indication denoting the current selection lies adjacent the return position of the selector, and so that the selector, when returned to the return position, lies adjacent the indication denoting the current selection rather than the indications denoting other possibilities.

As the chosen selection is displayed adjacent the return position then, in normal operation, the selector is adjacent an indication of the chosen selection, rather than of any possible other selection.

The display may comprise an electronic or electrical display and in particular may comprise a display screen. Any suitable electrical or electronic display may be used for example an LCD, TFT or OLED display. The display may be illuminated. Alternatively the display may be mechanical in which case it may comprise a member, such as a strip or ribbon, bearing indications of available selections which is arranged to move on operation of the selector so that the chosen selection is displayed adjacent the return position of the selector. The display may be arranged to highlight the indication denoting the current selection.

The selector may be an automatic transmission selector. In this case the selector is operable to select a mode of operation of the transmission from a range of available modes. These modes may include park, reverse, neutral and drive and one or more additional modes of operation. The display may be operable to indicate the selected mode of operation by display of a letter, numeral, or other symbol or indicia.

The display may be illuminated. The display may be arranged so that only an indication of the chosen selection is illuminated. Alternatively illumination of the indication of the chosen selection may be altered, such as by changing its colour, in order to highlight the chosen selection.

The selector may be a lever. The selector may be operable from the return position to sequentially index the chosen selection from a sequence of available selections. The selector may be operable to two selection positions to index the chosen selection up and down within a sequence of available selections. The selector may be mounted within a linear gate. The display may be elongate.

In order that the invention may be more clearly understood, an embodiment thereof will now be described by way of example, with reference to the accompanying drawings, of which:
**Figures 1A-E** show a number of views of a conventional type of automotive automatic transmission selector lever arrangement;
**Figures 2A-E** show a number of views of an automotive automatic transmission selector lever arrangement; and
**Figures 3A-E** show a number of views of an automotive automatic transmission selector lever arrangement according to the invention.

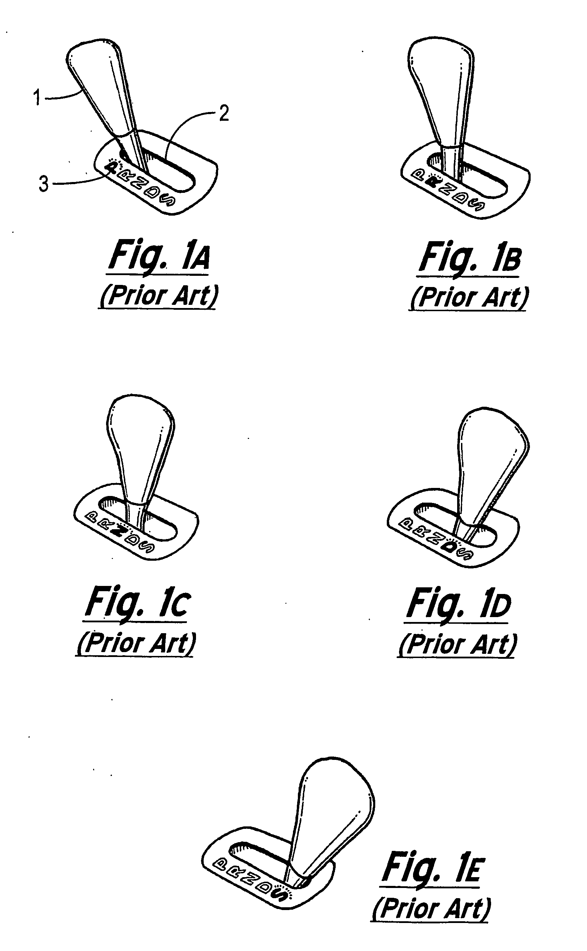

Figures 1A to 1E show a conventional multi-stable automatic transmission selection lever arrangement. The arrangement comprises a lever 1 which is movable between a plurality of positions within a linear gate 2. Alongside the gate is a sequence of letters, in this case PRNDS, indicating the mode of transmission operation which is selected by moving the lever I to a position adjacent the letter. The letters stand for park, reverse, neutral, drive and sport respectively. The letters remain in a fixed relationship relative to the gate. When the lever 1 is moved to a position adjacent a particular letter in order to select a desired mode of operation of the gearbox the letter adjacent which the lever is placed illuminates. Figures 1A to 1E respectively show the lever 1 in each of its possible operational positions. This arrangement is well known.

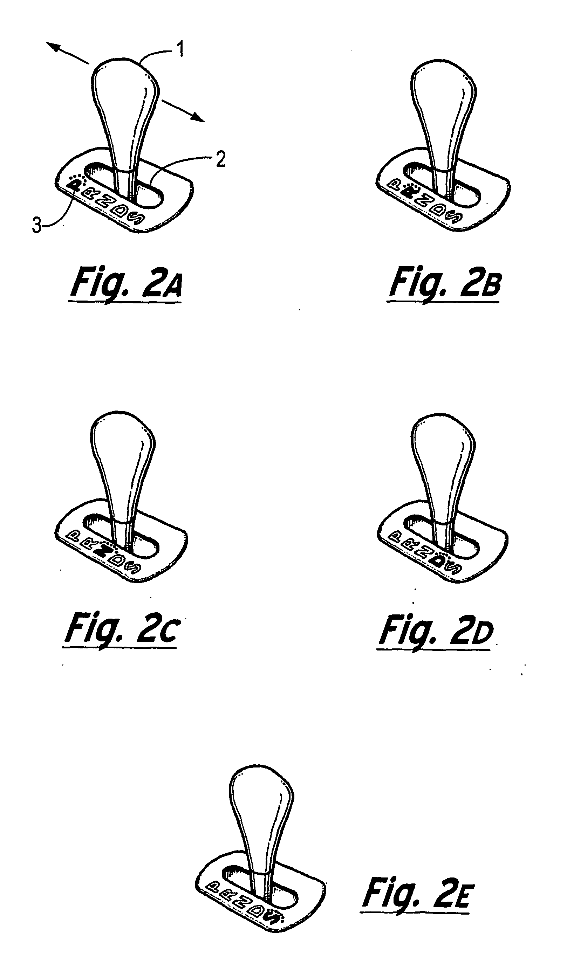

Figures 2A to 2E show a mono-stable automatic transmission selector lever arrangement which does not fall within the scope of the claims. This arrangement comprises a lever 1 operable in a linear gate 2 adjacent which are provided letters indicating the available modes of operation which can be selected, with the letter indicating the current selection illuminating. In contrast, however, to the arrangement illustrated in Figures 1A to E the lever 1 of this arrangement is biased to a central return position in which it lies adjacent the letter N. To select a desired operating mode a user displaces the lever 1 forwards or backwards within the gate against a return spring or other resiliently biased member, and then releases the lever allowing it to return to the return position. This causes the operating mode to be indexed one step up or down the available options. For example, as shown in Figure 2A park mode is selected. To select reverse gear a user displaces the lever 1 backwards, that is towards the letters D and S away from the letter N, and releases the lever allowing it to return to the return position. This causes the transmission to select reverse mode and the letter R adjacent the gate 2 is illuminated. Figures 2A to 2E show selection of each available mode of operation. In each mode it will be noted that the lever 1 remains in the return position adjacent the letter N.

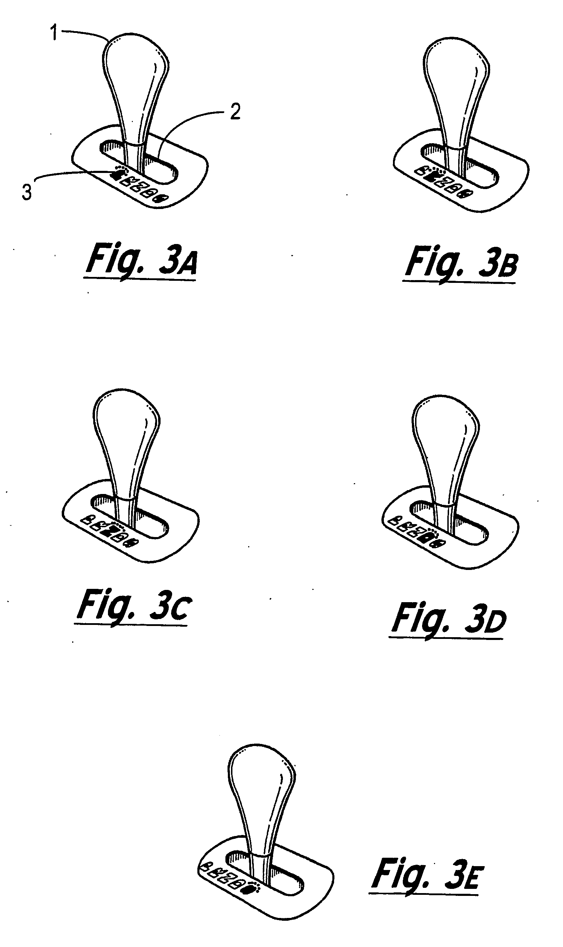

Figures 3A to 3E illustrate an automatic transmission selector lever arrangement according to the invention. There is a mono-stable lever 1 operable in a linear gate 2 adjacent which are displayed letters 3 denoting available modes of operation of the transmission, and with this arrangement the position of the displayed letters 3 is movable relative to the gate 2.

As with the selector arrangement of Figures 2A to 2E the lever is mono-stable type and returns to a central return position on release. Transmission mode selection is achieved by displacing the lever against a resilient bias either forwards or backwards within the gate 2 to index the selected mode of operation sequentially from the available modes. As a selection is made the displayed letters 3 move relative to the gate 2 so that the letter denoting the selected mode of operation lies adjacent the return position of the lever 1 so that the lever, when it returns to the return position, always lies adjacent the letter denoting the selected mode of operation. In addition, the letter denoting the selected mode of operation is illuminated or otherwise highlighted. This provides additional clarity as regards the selected mode as compared to the arrangement of Figures 2A-E. From a driver's point of view, the selected mode of operation can be more easily determined at a glance. The arrangement combines the flexibility of a mono-stable operation with the clarity of indication of current selection provided by the multi-stable arrangement such as illustrated in Figures 1A to 1E.

It will be appreciated that the moving letters 3 may be provided by any convenient means. In one arrangement an electronic display screen is provided adjacent the gate 2 such as an LCD, TFT or OLED display. In another arrangement the display is effected mechanically with physical movement of a strip or ribbon bearing the letters.

The above embodiment is described by way of example only. Many variations are possible without departing from the invention.

## Claims

1. A selector arrangement comprising a selector (1) resiliently biased towards a stable return position and which may be displaced from the return position against the resilient bias and then returned to the return position by the resilient bias to make a selection from a number of available possibilities, and a display operative to display indications (3) of a plurality or all of the available possibilities together, **characterised in that** as a selection is made all the displayed indications move relative to the return position of the selector so that only the indication denoting the current selection lies adjacent the return position of the selector, and so that the selector, when returned to the return position, lies adjacent the indication denoting the current selection rather than the indications denoting other possibilities.

2. A selector arrangement as claimed in claim 1 wherein the display comprises an electronic or electrical display.

3. A selector arrangement as claimed in any preceding claim wherein the display comprises a display screen.

4. A selector arrangement as claimed in claim 1 wherein the display is mechanical.

5. A selector arrangement as claimed in claim 4 comprising a member bearing indications of available selections which is arranged to move on operation of the selector so that the chosen selection is displayed adjacent the return position of the selector.

6. A selector arrangement as claimed in any preceding claim wherein the display is arranged to highlight the indication denoting the current selection.

7. A selector arrangement as claimed in any preceding claim wherein the selector (1) is an automatic transmission selector operable to select a mode of operation of the transmission from a range of available modes.

8. A selector arrangement as claimed in any preceding claim wherein the display is illuminated and arranged so that so that only an indication of the chosen selection is illuminated.

9. A selector arrangement as claimed in any one of claims 1 to 7 wherein the display is arranged so that the indication of the chosen selection is altered in order to highlight the chosen selection from the available selections.

10. A selector arrangement as claimed in any preceding claim wherein the selector (1) is operable from the return position to sequentially index the chosen selection from a sequence of available selections.

11. A selector arrangement as claimed in any preceding claim wherein the selector (1) is operable from the return position to two selection positions to index the chosen selection up and down within a sequence of available selections.

12. A selector arrangement as claimed in any preceding claim wherein the selector (1) is operable in a linear gate (2).

13. A selector arrangement as claimed in any preceding claim wherein the display is elongate.

14. A selector arrangement as claimed in any preceding claim wherein the selector (1) is a mono-stable selector.

15. A selector arrangement as claimed in any preceding claim wherein the selector (1) is mounted within a linear gate (2) and the indications (3) are displayed alongside the gate.

## Patentansprüche

1. Selektoranordnung mit einem Selektor (1), der elastisch in Richtung einer stabilen Rückkehrposition vorgespannt ist und der von der Rückkehrposition gegen die elastische Vorspannung versetzt werden und dann zu der Rückkehrposition durch die elastische Vorspannung zurückgeführt werden kann, um eine Auswahl aus einer Anzahl von zugänglichen Möglichkeiten zu treffen, und einer Anzeige, die betriebsbereit ist, um Angaben (3) einer Mehrzahl oder sämtlicher zugänglicher Möglichkeiten gemeinsam anzuzeigen,
**dadurch gekennzeichnet,**
**dass** als eine Auswahl getroffen ist sämtliche der angezeigten Angaben in Bezug auf die Rückkehrposition des Selektors zu bewegen, so dass nur die Angabe, welche die gegenwärtige Auswahl anzeigt, benachbart zu der Rückkehrposition des Selektors liegt, und dass so der Selektor, wenn er zu der Rückkehrposition zurückgeführt ist, benachbart zu der Angabe liegt, welche die gegenwärtige Auswahl anzeigt, eher als zu den Angaben, welche andere Möglichkeiten anzeigen.

2. Selektoranordnung nach Anspruch 1,
wobei die Anzeige eine elektronische oder elektrische Anzeige aufweist.

3. Selektoranordnung nach einem vorstehenden Anspruch,
wobei die Anzeige einen Anzeigebildschirm aufweist.

4. Selektoranordnung nach Anspruch 1,
wobei die Anzeige mechanisch ist.

5. Selektoranordnung nach Anspruch 4,
mit einem Glied, das Angaben der zugänglichen Auswahlmöglichkeiten beinhaltet, das angeordnet ist, um sich im Betrieb des Selektors zu bewegen, so dass die getroffene Auswahl benachbart zu der Rückkehrposition des Selektors angezeigt wird.

6. Selektoranordnung nach einem vorstehenden Anspruch,
wobei die Anzeige angeordnet ist, um die Angabe, welche die gegenwärtige Auswahl anzeigt, hervorzuheben.

7. Selektoranordnung nach einem vorstehenden Anspruch,
wobei der Selektor (1) ein automatischer Übertragungsselektor ist, der betriebsbereit ist, um einen Betriebsmodus der Übertragung aus einem Bereich von erhältlichen Modi auszuwählen.

8. Selektoranordnung nach einem vorstehenden Anspruch,
wobei die Anzeige beleuchtet wird und so angeordnet ist, dass nur eine Angabe der getroffenen Auswahl beleuchtet wird.

9. Selektoranordnung nach einem der Ansprüche 1 bis 7,
wobei die Anzeige so angeordnet ist, dass die Angabe der getroffenen Auswahl verändert wird, um die getroffene Auswahl aus den zugänglichen Auswahlmöglichkeiten hervorzuheben.

10. Selektoranordnung nach einem vorstehenden Anspruch,
wobei der Selektor (1) aus der Rückkehrposition betriebsbereit ist, um nacheinander die getroffene Auswahl aus einer Folge von zugänglichen Auswahlmöglichkeiten einzuteilen.

11. Selektoranordnung nach einem vorstehenden Anspruch,
wobei der Selektor (1) aus der Rückkehrposition in zwei Auswahlpositionen betriebsbereit ist, um die getroffene Auswahl aus oben und unten innerhalb einer Folge von zugänglichen Auswahlmöglichkeiten einzuteilen.

12. Selektoranordnung nach einem vorstehenden Anspruch,
wobei der Selektor (1) in einem linearen Ausschnitt betriebsbereit ist.

13. Selektoranordnung nach einem vorstehenden Anspruch,
wobei die Anzeige länglich ist.

14. Selektoranordnung nach einem vorstehenden Anspruch,
wobei der Selektor (1) ein monostabiler Selektor ist.

15. Selektoranordnung nach einem vorstehenden Anspruch,
wobei der Selektor (1) innerhalb eines linearen Ausschnitts (2) angebracht ist und die Angaben (3) entlang des Ausschnitts angezeigt werden.

## Revendications

1. Agencement de sélecteur comprenant un sélecteur (1) sollicité de manière élastique vers une position de rappel stable et qui peut être déplacé à partir de la position de rappel en s'opposant à la sollicitation élastique puis être rappelé vers la position de rappel par la sollicitation élastique pour procéder à une sélection parmi un certain nombre de possibilités disponibles, et un affichage fonctionnel pour afficher ensemble des indications (3) d'une pluralité ou de toutes les possibilités disponibles, **caractérisé en ce que**, quand une sélection est faite, toutes les indications affichées se déplacent par rapport à la position de rappel du sélecteur de telle sorte que seule l'indication indiquant la sélection actuelle se trouve adjacente à la position de rappel du sélecteur, et de telle sorte que le sélecteur, quand il est rappelé vers la position de rappel, se trouve adjacent à l'indication indiquant la sélection actuelle plutôt qu'aux indications indiquant d'autres possibilités.

2. Agencement de sélecteur selon la revendication 1, dans lequel l'affichage comprend un affichage électronique ou électrique.

3. Agencement de sélecteur selon l'une quelconque des revendications précédentes, dans lequel l'affichage comprend un écran d'affichage.

4. Agencement de sélecteur selon la revendication 1, dans lequel l'affichage est mécanique.

5. Agencement de sélecteur selon la revendication 4, comprenant un élément portant des indications des sélections disponibles, qui est agencé de façon à se déplacer lors du fonctionnement du sélecteur, de sorte que la sélection choisie soit affichée adjacente à la position de rappel du sélecteur.

6. Agencement de sélecteur selon l'une quelconque des revendications précédentes, dans lequel l'affichage est agencé de façon à mettre en évidence l'indication indiquant la sélection actuelle.

7. Agencement de sélecteur selon l'une quelconque des revendications précédentes, dans lequel le sélecteur (1) est un sélecteur de boîte de vitesses automatique fonctionnel pour sélectionner un mode de fonctionnement de la boîte de vitesses parmi une gamme de modes disponibles.

8. Agencement de sélecteur selon l'une quelconque des revendications précédentes, dans lequel l'affichage est éclairé et agencé de telle sorte que seule une indication de la sélection choisie soit éclairée.

9. Agencement de sélecteur selon l'une quelconque des revendications 1 à 7, dans lequel l'affichage est agencé de telle sorte que l'indication de la sélection choisie soit modifiée afin de mettre en évidence la sélection choisie parmi les sélections disponibles.

10. Agencement de sélecteur selon l'une quelconque des revendications précédentes, dans lequel le sélecteur (1) est fonctionnel à partir de la position de rappel pour indexer de manière séquentielle la sélection choisie à partir d'une séquence de sélections disponibles.

11. Agencement de sélecteur selon l'une quelconque des revendications précédentes, dans lequel le sélecteur (1) est fonctionnel à partir de la position de rappel vers deux positions de sélection pour indexer la sélection choisie vers le haut et vers le bas à l'intérieur d'une séquence de sélections disponibles.

12. Agencement de sélecteur selon l'une quelconque des revendications précédentes, dans lequel le sélecteur (1) est fonctionnel dans une grille linéaire (2).

13. Agencement de sélecteur selon l'une quelconque des revendications précédentes, dans lequel l'affichage est allongé.

14. Agencement de sélecteur selon l'une quelconque des revendications précédentes, dans lequel le sélecteur (1) est un sélecteur monostable.

15. Agencement de sélecteur selon l'une quelconque des revendications précédentes, dans lequel le sélecteur (1) est monté à l'intérieur d'une grille linéaire (2) et les indications (3) sont affichées à côté de la grille.
